# EUROPEAN PATENT APPLICATION

(11) **EP 4 832 517 A1**
(43) Date of publication of application: **28.10.2026**
(21) Application number: 24906035.1
(22) Date of filing: 29.11.2024
(51) Int. Cl.: H04W 4/35

(54) **STORE AFFILIATION MANAGEMENT METHOD, APPARATUS AND SYSTEM FOR ELECTRONIC PRICE TAGS**

(30) Priority: 19.12.2023 CN 202311753788
(71) Applicant: Hanshow Technology Co., Ltd., Jiaxing, Zhejiang 314031 (CN)
(72) Inventor: LIANG, Min, Jiaxing, Zhejiang 314031 (CN); JI, Yaping, Jiaxing, Zhejiang 314031 (CN); WANG, Yujing, Jiaxing, Zhejiang 314031 (CN); ZHANG, Ju, Jiaxing, Zhejiang 314031 (CN); MA, Ruilei, Jiaxing, Zhejiang 314031 (CN)
(74) Representative: IP TRUST SERVICES
(86) International application number: PCT/CN2024/135466
(87) International publication number: WO 2025/130550

(57) **Abstract**

Disclosed by the present disclosure are a store affiliation management method, apparatus and system for an electronic shelf label (ESL). The method includes: determining, when a commodity binding operation for an ESL needs to be initiated for a target store, a synchronization store of the ESL; delivering, if the synchronization store of the ESL is the target store, binding data to the ESL in a synchronous mode, so that the ESL binds a commodity according to the binding data; and sending, if the synchronization store of the ESL is not the target store, an asynchronization signal to the ESL to notify the ESL to change the synchronization base station to the base station of the target store, and delivering the binding data to the ESL in the synchronous mode; and the ESL only receives the signal sent by the synchronization base station in a synchronous receiving state, and receives both the signal sent by the synchronization base station and the asynchronization signal sent by other base stations in a synchronous-asynchronous receiving state.

## Description

### RELATED APPLICATION

The present disclosure claims priority to Chinese Patent Application NO. 202311753788.9 filed on December 19, 2023, which is hereby incorporated by reference in its entirety.

### TECHNICAL FIELD

The present disclosure relates to the technical field of electronic shelf labels, and particularly, to a store affiliation management method, apparatus and system for electronic shelf labels.

### BACKGROUND

This section is intended to provide background or context for the embodiments of the present disclosure set forth in the claims. The description herein is not admitted to be the prior art merely by virtue of its inclusion in this section.

With the increasingly widespread application of electronic shelf label (ESL) systems across various retail environments, the number of stores continues to grow, and adjacent store layouts have become commonplace. After an ESL is deployed, its data may be synchronized to the base stations of an adjacent store. In this case, if a store with which the ESL is affiliated initiates communication with the ESL synchronized to the adjacent store, the communication will fail. In addition, a heartbeat signal reported by an ESL in one store may be concurrently received by a plurality of adjacent stores. A backend system cannot determine whether the ESL is affiliated with a store that receives its heartbeat signal, which may cause erroneous operations on the ESLs in adjacent stores.

To solve the above problems, the existing technical solutions require users to create and maintain store-level whitelists (e.g., lists composed of ESLs affiliated with the corresponding stores) to predefine the store affiliation of each ESL. The backend system performs control based on such store-level whitelists, i.e., it only allows the ESLs on the whitelists to complete synchronization and registration with their affiliated stores, and carries out store configuration and service communication for these ESLs.

A large quantity of ESLs are currently in use. The creation and maintenance of store-level whitelists impose a heavy workload, set high operational standards for staff, cause considerable inconvenience for users using the ESL system, increase store operating costs and reduce business efficiency. In addition, for stores that adopt store-level whitelists, if newly deployed ESLs have not been pre-added to the corresponding whitelist, their initial binding will either fail or proceed at an extremely slow rate, as the system does not allow them to synchronize and register.

### SUMMARY

The embodiments of the present disclosure provide a store affiliation management method for an electronic shelf label (ESL). The method is applied to an ESL management system to automatically manage the store affiliation of an ESL, thereby achieving fast initial binding of the ESL and preventing a background ESL management system from performing erroneous operations on the ESLs affiliated with adjacent stores. The method includes:
determining, when a commodity binding operation for an ESL needs to be initiated for a target store, a synchronization store of the ESL; and after determining a synchronization base station, the ESL determines a receiving state thereof according to a synchronization signal broadcast by the synchronization base station, and the receiving state includes a synchronous receiving state and a synchronous-asynchronous receiving state, and the synchronization base station is a base station to which the ESL synchronizes, and a store corresponding to the synchronization base station is the synchronization store;
delivering, if the synchronization store of the ESL is the target store, binding data to the ESL in a synchronous manner, and the ESL binds a commodity according to the binding data; and
sending, if the synchronization store of the ESL is not the target store, an asynchronization signal to the ESL to notify the ESL to change the synchronization base station to the base station of the target store, and then delivering the binding data to the ESL in the synchronous manner; and the ESL, in the synchronous receiving state, only receives a signal sent by the synchronization base station, and in, the synchronous-asynchronous receiving state, receives both the signal sent by the synchronization base station and an asynchronization signal sent by a base station other than the synchronization base station.

The embodiments of the present disclosure provide a store affiliation management method for an electronic shelf label (ESL). The method is applied to an ESL to automatically manage the store affiliation of the ESL, thereby achieving fast initial binding of the ESL and preventing a background ESL management system from performing erroneous operations on the ESLs affiliated with adjacent stores. The method includes:
synchronizing with a base station of a store, determining the base station as a synchronization base station, and determining the store corresponding to the synchronization base station as a synchronization store;
receiving a synchronization signal broadcast by the synchronization base station;
determining, if an indicator of whether an adjacent store identifier exists in the synchronization signal indicates existence and no commodity is bound to the ESL, a receiving state of the ESL as a synchronous-asynchronous receiving state; changing, after receiving an asynchronization signal sent by the base station of a target store, the synchronization base station to the base station of the target store, receiving binding data delivered by the synchronization base station in a synchronous manner, and determining the receiving state of the ESL as a synchronous receiving state; receiving, after receiving the synchronization signal sent by the synchronization base station of the target store, the binding data delivered by the synchronization base station in the synchronous manner, and determining the receiving state of the ESL as the synchronous receiving state; and the ESL, in the synchronous-asynchronous receiving state, can receive both a signal sent by the synchronization base station and an asynchronization signal sent by a base station other than the synchronization base station;
determining, if the indicator of whether the adjacent store identifier exists in the synchronization signal indicates non-existence, the receiving state of the ESL as the synchronous receiving state, and receiving binding data delivered by an electronic information management system in the synchronous manner under the synchronous receiving state; and the ESL, in the synchronous receiving state, only receives the signal sent by the synchronization base station; and
binding the commodity after receiving the binding data.

The embodiments of the present disclosure provide a store affiliation management apparatus for an electronic shelf label (ESL). The apparatus is applied to an ESL management system to automatically manage the store affiliation of the ESL, thereby achieving fast initial binding of the ESL and preventing a background ESL management system from performing erroneous operations on the ESLs affiliated with adjacent stores. The apparatus includes:
a synchronization store determination module configured to determine, when a commodity binding operation for an ESL needs to be initiated for a target store, a synchronization store of the ESL; and after determining a synchronization base station, the ESL determines a receiving state thereof according to a synchronization signal broadcast by the synchronization base station, and the receiving state includes a synchronous receiving state and a synchronous-asynchronous receiving state, and the synchronization base station is a base station to which the ESL synchronizes, and a store corresponding to the synchronization base station is the synchronization store;
a synchronous mode binding module configured to deliver, when the synchronization store of the ESL is the target store, binding data to the ESL in a synchronous manner, and the ESL binds a commodity according to the binding data; and
an asynchronous binding module configured to send, if the synchronization store of the ESL is not the target store, an asynchronization signal to the ESL to notify the ESL to change the synchronization base station to the base station of the target store, and then deliver the binding data to the ESL in the synchronous manner; and the ESL, in the synchronous receiving state, only receives a signal sent by the synchronization base station, and, in the synchronous-asynchronous receiving state, receives both the signal sent by the synchronization base station and an asynchronization signal sent by a base station other than the synchronization base station.

The embodiments of the present disclosure provide a store affiliation management apparatus for an electronic shelf label (ESL). The apparatus is applied to an ESL to automatically manage the store affiliation of the ESL, thereby achieving fast initial binding of the ESL and preventing a background ESL management system from performing erroneous operations on the ESLs affiliated with adjacent stores. The apparatus includes:
a synchronization module configured to synchronize with a base station of a store, determine the base station as a synchronization base station, and determine the store corresponding to the synchronization base station as a synchronization store;
a synchronization signal receiving module configured to receive a synchronization signal broadcast by the synchronization base station;
a receiving state determination module configured to determine, if an indicator of whether an adjacent store identifier exists in the synchronization signal indicates existence and no commodity is bound to the ESL, a receiving state of the ESL as a synchronous-asynchronous receiving state; change, after receiving an asynchronization signal sent by the base station of a target store, the synchronization base station to the base station of the target store, receive binding data delivered by the synchronization base station in a synchronous manner, and determine the receiving state of the ESL as a synchronous receiving state; receive, after receiving the synchronization signal sent by the synchronization base station of the target store, the binding data delivered by the synchronization base station in the synchronous manner, and determine the receiving state of the ESL as the synchronous receiving state; and the ESL, in the synchronous-asynchronous receiving state, can receive both a signal sent by the synchronization base station and an asynchronization signal sent by a base station other than the synchronization base station; determine, if the indicator of whether the adjacent store identifier exists in the synchronization signal indicates non-existence, the receiving state of the ESL as the synchronous receiving state, and receive binding data delivered by an electronic information management system in the synchronous manner under the synchronous receiving state; and the ESL, in the synchronous receiving state, only receives the signal sent by the synchronization base station; and
a binding module configured to bind the commodity after receiving the binding data.

The embodiments of the present disclosure provide a store affiliation management system for an electronic shelf label (ESL) to automatically manage the store affiliation of the ESL, thereby achieving fast initial binding of the ESL and preventing a background ESL management system from performing erroneous operations on the ESLs affiliated with adjacent stores. The system includes an ESL management system and an ESL, and
the ESL is configured to:
synchronize with a base station of a store, determine the base station as a synchronization base station, and determine the store corresponding to the synchronization base station as a synchronization store;
receive a synchronization signal broadcast by the synchronization base station; and
determine, if an indicator of whether an adjacent store identifier exists in the synchronization signal indicates existence and no commodity is bound to the ESL, a receiving state of the ESL as a synchronous-asynchronous receiving state, otherwise, determine the receiving state of the ESL as a synchronous receiving state; and the ESL, in the synchronous receiving state, only receives a signal sent by the synchronization base station, and, in the synchronous-asynchronous receiving state, receives both the signal sent by the synchronization base station and an asynchronization signal sent by a base station other than the synchronization base station;
the ESL management system is configured to:
   determine, when a commodity binding operation for the ESL needs to be initiated for a target store, a synchronization store of the ESL; if the synchronization store of the ESL is the target store, deliver binding data to the ESL in a synchronous manner; and
   send, if the synchronization store of the ESL is not the target store, an asynchronization signal to the ESL to notify the ESL to change the synchronization base station to the base station of the target store, and then deliver the binding data to the ESL in the synchronous mode; and
   the ESL is further configured to:
      change, after receiving the asynchronization signal sent by the base station of the target store, the synchronization base station to the base station of the target store, receive the binding data delivered by the synchronization base station in the synchronous manner, and determine the receiving state of the ESL as the synchronous receiving state; and
      bind the commodity after receiving the binding data.

In the embodiments of the present disclosure, after synchronizing with a base station of a store, the ESL can determine whether there is an adjacent store according to the synchronization signal. If an adjacent store exists, the ESL can change the synchronization base station via an asynchronization signal. In the synchronous-asynchronous receiving state, the ESL can directly receive the synchronization signal and the binding data sent by the synchronization base station when synchronized with the target store. When synchronized with an adjacent store, the ESL can change the synchronization base station to the base station of the target store before receiving the binding data, and then changes to the synchronous receiving state in which only the synchronization signal sent by the synchronization base station is received. In this way, it is unnecessary for users to create and maintain user-level whitelists, and the ESL management system can automatically manage the store affiliation of the electronic shelf label, thereby achieving fast initial binding of the ESL and avoiding erroneous operations on the ESL affiliated with the adjacent store.

### BRIEF DESCRIPTION OF DRAWINGS

In order to more clearly illustrate the technical solutions in the embodiments of the present disclosure or in the prior art, the drawings to be used in the description of the embodiments or the prior art will be briefly introduced below. Obviously, the drawings involved in the following description only illustrate some embodiments of the present disclosure, and other drawings can be obtained by those of ordinary skill in the art according to these drawings without paying any inventive effort. In the drawings:
FIG. 1 illustrates a schematic diagram of a scenario of an adjacent store according to an embodiment of the present disclosure.
FIG. 2 illustrates a flowchart of a store affiliation management method for an electronic shelf label (ESL) according to an embodiment of the present disclosure.
FIG. 3 illustrates a flowchart of a store affiliation management method for an ESL according to another embodiment of the present disclosure.
FIG. 4 illustrates a timing diagram for signal sending in synchronous and asynchronous manners according to an embodiment of the present disclosure.
FIG. 5 illustrates a schematic diagram of a store affiliation management apparatus for an ESL according to another embodiment of the present disclosure.
FIG. 6 illustrates a schematic diagram of a store affiliation management apparatus for an ESL according to an embodiment of the present disclosure.
FIG. 7 illustrates a schematic diagram of a computer device according to an embodiment of the present disclosure.

### DESCRIPTION OF EMBODIMENTS

In order that the objectives, technical solutions and advantages of the embodiments of the present disclosure are clearer, the embodiments of the present disclosure will be further described in detail with reference to the drawings. Herein, the exemplary embodiments of present disclosure and the descriptions thereof are used to explain the present disclosure, but should not be used as limitations thereto.

The electronic shelf label (ESL) in the embodiments of the present disclosure refers to a common electronic merchandise price tag used in existing supermarkets. The ESL is capable of page switching and has a flashing Light Emitting Diode (LED) light that can flash.

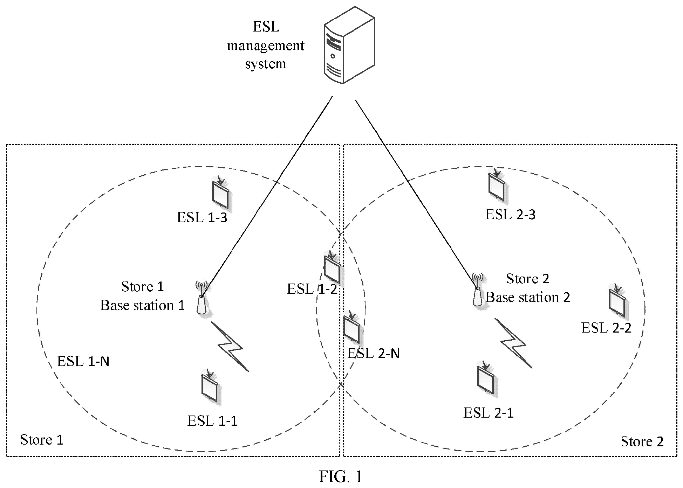

The embodiments of the present disclosure are directed to a scenario of adjacent stores, and mainly relate to a method for an ESL to receive signals and determine their affiliated store. FIG. 1 illustrates a schematic diagram of a scenario of an adjacent store according to an embodiment of the present disclosure. In FIG. 1, ESLs 1-2 which shall be affiliated with Store 1 and ESL 2-N which shall be affiliated with Store 2 are prone to misjudgment.

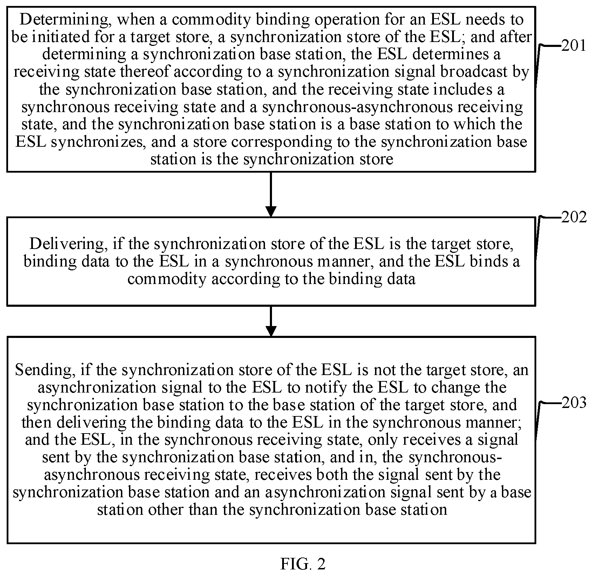

FIG. 2 illustrates a flowchart of a store affiliation management method for an electronic shelf label (ESL) according to an embodiment of the present disclosure. The method is applied to an ESL management system and includes the following steps.

Step 201: determining, when a commodity binding operation for an ESL needs to be initiated for a target store, a synchronization store of the ESL; and after determining a synchronization base station, the ESL determines a receiving state thereof according to a synchronization signal broadcast by the synchronization base station, and the receiving state includes a synchronous receiving state and a synchronous-asynchronous receiving state, and the synchronization base station is a base station to which the ESL synchronizes, and a store corresponding to the synchronization base station is the synchronization store.

Step 202: delivering, if the synchronization store of the ESL is the target store, binding data to the ESL in a synchronous manner, and the ESL binds a commodity according to the binding data.

Step 203: sending, if the synchronization store of the ESL is not the target store, an asynchronization signal to the ESL to notify the ESL to change the synchronization base station to the base station of the target store, and then delivering the binding data to the ESL in the synchronous manner; and the ESL, in the synchronous receiving state, only receives a signal sent by the synchronization base station, and in, the synchronous-asynchronous receiving state, receives both the signal sent by the synchronization base station and an asynchronization signal sent by a base station other than the synchronization base station.

In an embodiment, the method further includes:
controlling the base station of each store to scan the synchronization signal from the base station of an adjacent store;
setting, if the base station of the store detects the synchronization signal from the base station of the adjacent store, an indicator of whether an adjacent store identifier exists in the synchronization signal broadcast by the base station of the store to exist;
in this embodiment, after receiving the synchronization signal broadcast by the synchronization base station, the ESL determines the receiving state thereof according to the indicator of whether an adjacent store identifier exists in the synchronization signal.

In an embodiment, the delivering the binding data to the ESL in the synchronous mode includes:
sending the binding data to the ESL via the synchronization base station, so that the ESL binds the commodity according to the binding data.

In an embodiment, the sending the asynchronization signal to the ESL to notify the ESL to change the synchronization base station to the base station of the target store, and then delivering the binding data to the ESL in the synchronous mode includes:
notifying the base station of the target store to send the asynchronization signal to the ESL, and the asynchronization signal contains a unique code of the target store, and the ESL changes the synchronization base station to the base station of the target store according to the received asynchronization signal, receives the binding data delivered by the synchronization base station in the synchronous manner, completes registration and networking, and determines the receiving state of the ESL as the synchronous receiving state.

In an embodiment, the method further includes:
creating a unique code for each store, configuring the unique code to the base station of the corresponding store, and configuring the unique code to a handheld device of the corresponding store when the handheld device logs in; and after receiving a binding relationship between the commodity and the ESL as well as the unique code of the store sent by a user via the handheld device, the ESL determines whether the synchronization store is the target store according to the unique code; if so, the ESL reports the binding relationship to the synchronization base station; and if not, the ESL actively synchronizes with the base station of the target store and then reports the binding relationship to the synchronization base station;
retrieving, after receiving the binding relationship between the commodity and the ESL sent by the ESL, the binding data corresponding to the commodity in the binding relationship; and
delivering the binding data to the ESL via the synchronization base station.

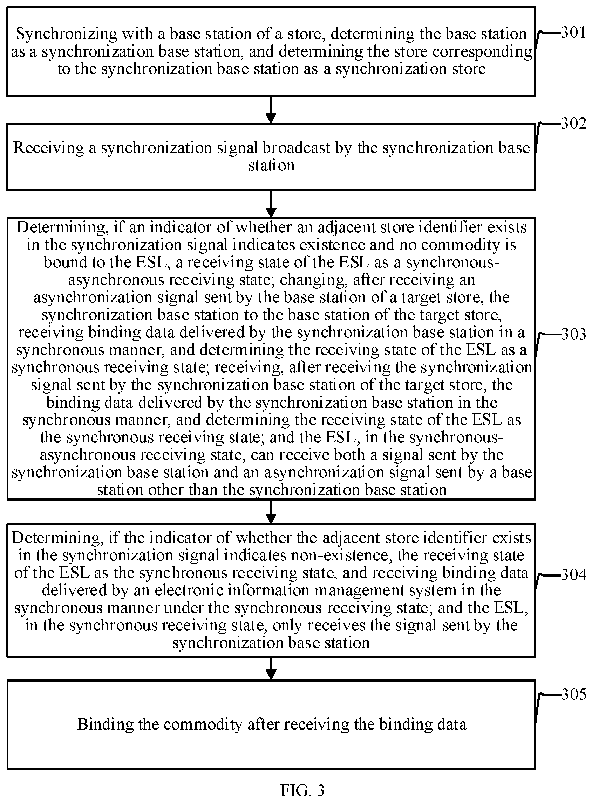

FIG. 3 illustrates another flowchart of a store affiliation management method for an ESL according to an embodiment of the present disclosure. The method is applied to the ESL and includes the following steps.

Step 301: synchronizing with a base station of a store, determining the base station as a synchronization base station, and determining the store corresponding to the synchronization base station as a synchronization store.

Step 302: receiving a synchronization signal broadcast by the synchronization base station.

Step 303: determining, if an indicator of whether an adjacent store identifier exists in the synchronization signal indicates existence and no commodity is bound to the ESL, a receiving state of the ESL as a synchronous-asynchronous receiving state; changing, after receiving an asynchronization signal sent by the base station of a target store, the synchronization base station to the base station of the target store, receiving binding data delivered by the synchronization base station in a synchronous manner, and determining the receiving state of the ESL as a synchronous receiving state; receiving, after receiving the synchronization signal sent by the synchronization base station of the target store, the binding data delivered by the synchronization base station in the synchronous manner, and determining the receiving state of the ESL as the synchronous receiving state; and the ESL, in the synchronous-asynchronous receiving state, can receive both a signal sent by the synchronization base station and an asynchronization signal sent by a base station other than the synchronization base station.

Step 304: determining, if the indicator of whether the adjacent store identifier exists in the synchronization signal indicates non-existence, the receiving state of the ESL as the synchronous receiving state, and receiving binding data delivered by an electronic information management system in the synchronous manner under the synchronous receiving state; and the ESL, in the synchronous receiving state, only receives the signal sent by the synchronization base station.

Step 305: binding the commodity after receiving the binding data.

In an embodiment, the synchronizing with the base station of the store includes:
periodically sending heartbeat data, and after being received by at least one base station of the store, the heartbeat data is reported to an ESL management system which sends a synchronization instruction to the ESL via the base station; and
selecting, upon first receiving the synchronization instruction sent by the base station of the store, an optimal base station in the store for synchronization and completing registration and networking according to the synchronization instruction.

In an embodiment, after the synchronizing with the base station of the store, the method further includes:
sending a registration and networking message to the ESL management system, and the registration and networking message contains a unique code of the synchronization store and a synchronization identifier;
or sending heartbeat data to the ESL management system via the base station, and the heartbeat data contains the unique code of the synchronization store and the synchronization identifier.

In an embodiment, the method further includes:
periodically sending, after a synchronization state changes to an out-of-sync state, heartbeat data containing an out-of-sync identifier; and at least one base station sends the heartbeat data containing the out-of-sync identifier to an ESL management system, and the ESL management system sends a synchronization instruction containing a unique code of the target store to the ESL in the out-of-sync state via the base station;
selecting, upon receiving the synchronization instruction, an optimal base station in the target store for synchronization according to the unique code of the target store in the synchronization instruction, so as to obtain a current synchronization base station;
determining whether the current synchronization base station is the synchronization base station prior to the out-of-sync state;
skipping, if so, registration and networking, and reporting the synchronization state of the ESL to the ESL management system; and
performing, if not, registration and networking for the current synchronization base station, and sending a registration and networking message to the ESL management system.

In an embodiment, the method further includes:
actively sending, after the synchronization state changes to the out-of-sync state, a synchronization request to a plurality of base stations; and at least one base station sends a synchronization instruction containing a unique code of the target store to the ESL in the out-of-sync state;
selecting, upon receiving the synchronization instruction, an optimal base station in the target store for synchronization according to the unique code of the target store in the synchronization instruction to obtain a current synchronization base station;
determining whether the current synchronization base station is the synchronization base station prior to the out-of-sync state;
skipping, if so, registration and networking, and reporting the synchronization state of the ESL to an ESL management system; and
performing, if not, registration and networking for the current synchronization base station, and sending a registration and networking message to the ESL management system.

In an embodiment, the method further includes:
obtaining, after synchronizing with the base station of the store, a unique code of the store;
receiving a binding relationship between the commodity and the ESL as well as the unique code of the store sent by a user via a handheld device, and verifying whether the received unique code of the store is identical to a unique code of the synchronization store;
communicating, if so, with an ESL management system in the synchronous manner to perform commodity binding; and
actively sending, if not, a synchronization request and synchronizing with the base station corresponding to the received unique code of the store, then communicating with an ESL management system in the synchronous manner to perform commodity binding.

In an embodiment, the communicating with the ESL management system in the synchronous manner to perform commodity binding includes:
sending the binding relationship to the ESL management system via the synchronization base station, so that the ESL management system retrieves the binding data corresponding to the commodity in the received binding relationship and delivers the binding data to the ESL via the synchronization base station; and
performing commodity binding according to the binding data.

In an embodiment, the actively sending the synchronization request and synchronizing with the base station corresponding to the received unique code of the store includes:
determining, after receiving a synchronization instruction sent by the base station of the store, whether a unique code of the base station is identical to the received unique code of the store;
reporting, if so, the binding relationship via the base station corresponding to the synchronization instruction to complete binding, registration and networking; and
   continuing, if not, to wait for synchronization instructions from the base stations of other stores until the received unique code of the base station sending the synchronization instruction is identical to the received unique code of the store.

The solutions proposed in the embodiments of the present disclosure are explained below based on the foregoing embodiments. The embodiments of the present disclosure cover three scenarios: first, the ESL accesses a store for the first time; second, the ESL loses synchronization after accessing the store; third, a user communicates with the ESL via a handheld device through short-range communication such as the Near Field Communication (NFC). The details are described respectively as follows.

### Scenario 1

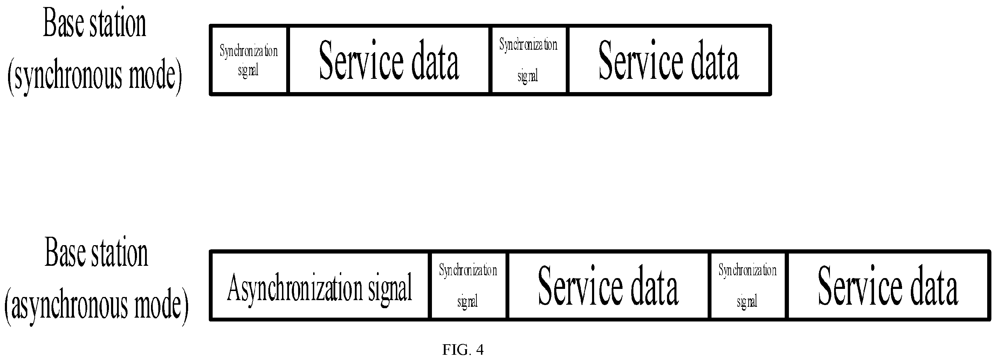

First, a synchronous manner and an asynchronous manner are introduced. A synchronization signal is sent in the synchronous manner, and an asynchronous broadcast signal is sent in the asynchronous mode. FIG. 4 illustrates a timing diagram for signal sending in synchronous and asynchronous manners according to an embodiment of the present disclosure.

S1: An ESL management system controls the base station of each store to scan the synchronization signals from the base stations of adjacent stores; if the base station of a store detects the synchronization signal from the base station of an adjacent store, an indicator of whether an adjacent store identifier exists in the synchronization signal broadcast by the base station of the store is set to exist.

For example, Store A and Store B periodically sending synchronization signals. When detecting the synchronization signal from the base station of Store B, the base station of Store A sets the indicator of whether an adjacent store identifier exists in the synchronization signal to exist.

S2: When accessing a new store, an ESL cannot identify its affiliated store and needs to synchronize with the base station of the store. In this case, the ESL periodically sends heartbeat data to the base stations of a plurality of stores. After receiving the heartbeat data, at least one base station of a store randomly sends a synchronization instruction to the ESL. Upon first receiving the synchronization instruction sent by the base station of the store, the ESL selects an optimal base station in the corresponding store for synchronization and completes registration and networking, according to the synchronization instruction.

The ESL sends a registration and networking message to the ESL management system, and the registration and networking message contains the unique code of the synchronization store and a synchronization identifier. Alternatively, the ESL sends heartbeat data to the ESL management system via the base station, and the heartbeat data contains the unique code of the synchronization store and a synchronization identifier. Both of the approaches inform the ESL management system to know which store the ESL is synchronized to.

S3: The ESL receives the synchronization signal broadcast by the synchronization base station. If the indicator of whether an adjacent store identifier exists in the synchronization signal indicates existence and no commodity is bound to the ESL, the receiving state of the ESL is determined as a synchronous-asynchronous receiving state. Otherwise, the receiving state of the ESL is determined as a synchronous receiving state. That is, since it has not completed binding with a specific commodity, the ESL maintains the state of asynchronously receiving the signals from another store even after completing synchronization, registration and networking within one store.

S4: When it is necessary to perform commodity binding operation on the ESL for the target store, the ESL management system determines the synchronization store of the ESL. If the synchronization store of the ESL is the target store, the binding data is delivered to the ESL in the synchronous manner. Specifically, the binding data is sent to the ESL via the synchronization base station, and the ESL binds the commodity according to the binding data.

If the synchronization store of the ESL is not the target store, an asynchronization signal is sent to the ESL to notify the ESL to change the synchronization base station to the base station of the target store. Specifically, the ESL management system notifies the base station of the target store to send an asynchronization signal to the ESL, and the asynchronization signal contains the unique code of the target store. In accordance with the received asynchronization signal, the ESL changes the synchronization base station to the base station of the target store, receives the binding data delivered by the synchronization base station in a synchronous manner, and determines the receiving state of the ESL as a synchronous receiving state. After receiving the synchronization signal sent by the synchronization base station of the target store, the ESL receives the binding data delivered by the synchronization base station in a synchronous manner and determines the receiving state of the ESL as a synchronous receiving state. In this embodiment, in the synchronous-asynchronous receiving state, the ESL can receive both the signal sent by the synchronization base station and the asynchronization signal sent by a base station other than the synchronization base station.

After commodity binding is completed, the current store affiliation of an ESL is determined.

In the above process, when the binding data is directly delivered by the ESL management system, the ESL can automatically manage the store affiliation thereof based on the delivered bonding data. Before the store affiliation is determined, the ESL can successfully receive service instructions from the affiliated store and synchronize therewith, regardless of which store it synchronizes with. The store affiliation determined via commodity binding prevents erroneous operations on the ESL caused by ambiguous store affiliation.

### Scenario 2

When an ESL roams after losing synchronization (asynchronization), it needs to re-establish synchronization. The ESL can restore synchronization in two ways after losing synchronization. First, after switching from the synchronization state to the out-of-sync (asynchronization) state, the ESL periodically sends heartbeat data which contains an out-of-sync identifier. Second, after switching from the synchronization state to the out-of-sync state, the ESL actively sends a synchronization request to a plurality of base stations, and at least one base station sends a synchronization instruction containing a unique code of the target store to the ESL in the out-of-sync state.

Thereafter, the ESL determines whether the current synchronization base station is the synchronization base station prior to the out-of-sync state. If so, the ESL skips registration and networking and reports its synchronization state to the ESL management system. If not, the ESL completes registration and networking with the current synchronization base station and sends a registration and networking message to the ESL management system.

This processing scheme enables adaptive confirmation of the store affiliation when the ESL is taken away and stored in a warehouse, and later put into use again in the original store or deployed to a different store.

### Scenario 3

A user may also communicate with the ESL via a handheld device through short-range communication such as NFC, and send the binding relationship between the commodity and the ESL to the ESL. The ESL uploads a binding instruction to the system via the base station, and the system retrieves ESL display data of the bound commodity. The system then delivers the data to the ESL via the base station, and the ESL presents the data on its screen. As described above, before a commodity is bound to the ESL, the ESL may be synchronized with the base station of an adjacent store. When the binding instruction is uploaded to the system through the synchronization base station of the adjacent store, the system will determine the affiliation of the ESL according to the uploading store and obtain commodity information from the uploading store, which will result in incorrect display updates being delivered to the ESL. To address this problem, the following processes are proposed on the basis of the foregoing method.

B1: The ESL management system creates a unique code for each store, configures the unique code to the base station of the corresponding store, and also configures the unique code to the handheld device of the corresponding store when a user logs in.

B2: After synchronizing with the base station of a store, the ESL obtains the unique code of the store. The ESL receives the binding relationship between the commodity and the ESL as well as the unique code of the store sent by the user via the handheld device, and verifies whether the received unique code is identical to the unique code of the synchronization store.

If so, the ESL communicates with the ESL management system in the synchronous manner to complete commodity binding. Specifically, the ESL sends the binding relationship to the ESL management system via the synchronization base station, the ESL management system retrieves the binding data corresponding to the commodity in the received binding relationship after receiving the binding relationship, and delivers the binding data to the ESL via the synchronization base station. The ESL then performs commodity binding based on the binding data.

If not, the ESL actively sends a synchronization request and synchronizes with the base station corresponding to the received unique code of the store. Specifically, after receiving the synchronization instruction sent by the base station of a store, the ESL determines whether a unique code of the base station is identical to the received unique code of the store. If so, the ESL uploads the binding relationship via the base station corresponding to the synchronization instruction, and completes binding, registration and networking. If not, the ELS continues to wait for synchronization instructions from the base stations of other stores until the received unique code of the base station sending the synchronization instruction is identical to the received unique code of the store. Afterwards, the ESL communicates with the ESL management system in the synchronous manner to perform commodity binding.

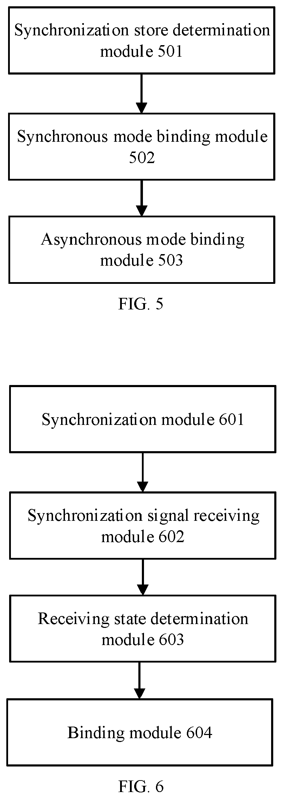

The embodiments of the present disclosure further provide a store affiliation management apparatus for an ESL. With reference to FIG. 5, the apparatus is applied to an ESL management system and includes:
a synchronization store determination module 501 configured to determine, when a commodity binding operation for an ESL needs to be initiated for a target store, a synchronization store of the ESL; and after determining a synchronization base station, the ESL determines a receiving state thereof according to a synchronization signal broadcast by the synchronization base station, and the receiving state includes a synchronous receiving state and a synchronous-asynchronous receiving state, and the synchronization base station is a base station to which the ESL synchronizes, and a store corresponding to the synchronization base station is the synchronization store;
a synchronous mode binding module 502 configured to deliver, when the synchronization store of the ESL is the target store, binding data to the ESL in a synchronous manner, and the ESL binds a commodity according to the binding data; and
an asynchronous binding module 503 configured to send, if the synchronization store of the ESL is not the target store, an asynchronization signal to the ESL to notify the ESL to change the synchronization base station to the base station of the target store, and then deliver the binding data to the ESL in the synchronous manner; and the ESL, in the synchronous receiving state, only receives a signal sent by the synchronization base station, and, in the synchronous-asynchronous receiving state, receives both the signal sent by the synchronization base station and an asynchronization signal sent by a base station other than the synchronization base station.

In an embodiment, the apparatus further includes a configuration module configured to control the base station of each store to scan the synchronization signals from the base station of adjacent store; set, if the base station of the store detects the synchronization signal from the base station of the adjacent store, an indicator of whether an adjacent store identifier exists in the synchronization signal broadcast by the base station of the store to exist; and
after receiving the synchronization signal broadcast by the synchronization base station, the ESL determines the receiving state thereof according to the indicator of whether an adjacent store identifier exists in the synchronization signal.

In an embodiment, the synchronous mode binding module 502 is specifically configured to:
send the binding data to the ESL via the synchronization base station, so that the ESL binds the commodity according to the binding data.

In an embodiment, the asynchronous binding module 503 is specifically configured to:
notify the base station of the target store to send the asynchronization signal to the ESL, and the asynchronization signal includes a unique code of the target store, and the ESL changes the synchronization base station to the base station of the target store according to the received asynchronization signal, receives the binding data delivered by the synchronization base station in the synchronous manner, completes registration and networking, and determines the receiving state of the ESL as the synchronous receiving state.

In an embodiment, the apparatus further includes an encoding module configured to:
create a unique code for each store, configure the unique code to the base station of the corresponding store, and configure the unique code to a handheld device of the corresponding store when the handheld device logs in; and after receiving a binding relationship between the commodity and the ESL as well as the unique code of the store sent by a user via the handheld device, the ESL determines whether the synchronization store is the target store according to the unique code; if so, the ESL reports the binding relationship to the synchronization base station; and if not, the ESL actively synchronizes with the base station of the target store and then reports the binding relationship to the synchronization base station;
retrieve, after receiving the binding relationship between the commodity and the ESL sent by the ESL, the binding data corresponding to the commodity in the binding relationship; and
deliver the binding data to the ESL via the synchronization base station.

The embodiments of the present disclosure further provide a store affiliation management apparatus for an ESL. With reference to FIG. 6, the apparatus is applied to an ESL and includes:
a synchronization module 601 configured to synchronize with a base station of a store, determine the base station as a synchronization base station, and determine the store corresponding to the synchronization base station as a synchronization store;
a synchronization signal receiving module 602 configured to receive a synchronization signal broadcast by the synchronization base station;
a receiving state determination module 603 configured todetermine, if an indicator of whether an adjacent store identifier exists in the synchronization signal indicates existence and no commodity is bound to the ESL, a receiving state of the ESL as a synchronous-asynchronous receiving state; change, after receiving an asynchronization signal sent by the base station of a target store, the synchronization base station to the base station of the target store, receive binding data delivered by the synchronization base station in a synchronous manner, and determine the receiving state of the ESL as a synchronous receiving state; receive, after receiving the synchronization signal sent by the synchronization base station of the target store, the binding data delivered by the synchronization base station in the synchronous manner, and determine the receiving state of the ESL as the synchronous receiving state; and the ESL, in the synchronous-asynchronous receiving state, can receive both a signal sent by the synchronization base station and an asynchronization signal sent by a base station other than the synchronization base station; determine, if the indicator of whether the adjacent store identifier exists in the synchronization signal indicates non-existence, the receiving state of the ESL as the synchronous receiving state, and receive binding data delivered by an electronic information management system in the synchronous manner under the synchronous receiving state; and the ESL, in the synchronous receiving state, only receives the signal sent by the synchronization base station; and
a binding module 604 configured to bind the commodity after receiving the binding data.

In an embodiment, the synchronization module 601 is specifically configured to periodically send heartbeat data, and after being received by at least one base station of the store, the heartbeat data is reported to an ESL management system which sends a synchronization instruction to the ESL via the base station;
select, upon first receiving the synchronization instruction sent by the base station of the store, an optimal base station in the store for synchronization and complete registration and networking according to the synchronization instruction.

In an embodiment, the synchronization module 601 is specifically configured to:
send a registration and networking message to the ESL management system, and the registration and networking message contains a unique code of the synchronization store and a synchronization identifier;
or send heartbeat data to the ESL management system via the base station, and the heartbeat data contains the unique code of the synchronization store and the synchronization identifier.

In an embodiment, the apparatus further includes a reconnection module configured to:
periodically send, after a synchronization state changes to an out-of-sync state, heartbeat data containing an out-of-sync identifier; and at least one base station sends the heartbeat data containing the out-of-sync identifier to an ESL management system, and the ESL management system sends a synchronization instruction containing a unique code of the target store to the ESL in the out-of-sync state via the base station;
select, upon receiving the synchronization instruction, an optimal base station in the target store for synchronization according to the unique code of the target store in the synchronization instruction, so as to obtain a current synchronization base station;
determine whether the current synchronization base station is the synchronization base station prior to the out-of-sync state;
skip, if so, registration and networking, and report the synchronization state of the ESL to the ESL management system; and
perform, if not, registration and networking for the current synchronization base station, and send a registration and networking message to the ESL management system.

In an embodiment, the reconnection module is configured to:
actively send, after the synchronization state changes to the out-of-sync state, a synchronization request to a plurality of base stations; and at least one base station sends a synchronization instruction containing a unique code of the target store to the ESL in the out-of-sync state;
select, upon receiving the synchronization instruction, an optimal base station in the target store for synchronization according to the unique code of the target store in the synchronization instruction to obtain a current synchronization base station;
determine whether the current synchronization base station is the synchronization base station prior to the out-of-sync state;
skip, if so, registration and networking, and report the synchronization state of the ESL to an ESL management system; and
perform, if not, registration and networking for the current synchronization base station, and send a registration and networking message to the ESL management system.

In an embodiment, the apparatus further includes a re-encoding module configured to:
obtain, after synchronizing with the base station of the store, a unique code of the store;
receive a binding relationship between the commodity and the ESL as well as the unique code of the store sent by a user via a handheld device, and verify whether the received unique code of the store is identical to a unique code of the synchronization store;
communicate, if so, with an ESL management system in the synchronous mode to perform commodity binding; and
actively send, if not, a synchronization request and synchronizing with the base station corresponding to the received unique code of the store, then communicate with the ESL management system in the synchronous manner to perform commodity binding.

In an embodiment, the re-encoding module is further configured to:
send the binding relationship to the ESL management system via the synchronization base station, so that the ESL management system retrieves the binding data corresponding to the commodity in the received binding relationship and delivers the binding data to the ESL via the synchronization base station; and
perform commodity binding according to the binding data.

In an embodiment, the re-encoding module is further configured to:
determine, after receiving a synchronization instruction sent by the base station of the store, whether a unique code of the base station is identical to the received unique code of the store;
report, if so, the binding relationship via the base station corresponding to the synchronization instruction to complete binding, registration and networking; and
continue, if not, to wait for synchronization instructions from the base stations of other stores until the received unique code of the base station sending the synchronization instruction is identical to the received unique code of the store.

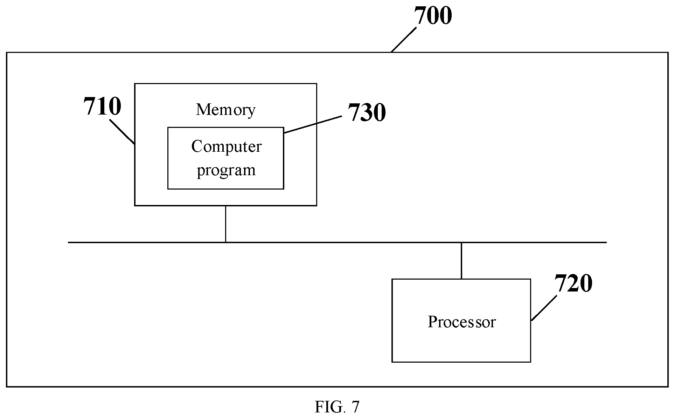

The embodiments of the present disclosure further provide a store affiliation management system for an ESL. With reference to FIG. 7, the store affiliation management system includes an ESL management system 701 and an ESL 702, in this embodiment,
the ESL is configured to:
synchronize with a base station of a store, determine the base station as a synchronization base station, and determine the store corresponding to the synchronization base station as a synchronization store;
receive a synchronization signal broadcast by the synchronization base station; and
determine, if an indicator of whether an adjacent store identifier exists in the synchronization signal indicates existence and no commodity is bound to the ESL, a receiving state of the ESL as a synchronous-asynchronous receiving state, otherwise, determine the receiving state of the ESL as a synchronous receiving state; and the ESL, in the synchronous receiving state, only receives a signal sent by the synchronization base station, and, in the synchronous-asynchronous receiving state, receives both the signal sent by the synchronization base station and an asynchronization signal sent by a base station other than the synchronization base station;
the ESL management system is configured to:
   determine, when a commodity binding operation for the ESL needs to be initiated for a target store, a synchronization store of the ESL; if the synchronization store of the ESL is the target store, deliver binding data to the ESL in a synchronous manner;
   send, if the synchronization store of the ESL is not the target store, an asynchronization signal to the ESL to notify the ESL to change the synchronization base station to the base station of the target store, and then deliver the binding data to the ESL in the synchronous mode; and
   the ESL is further configured to:
      change, after receiving the asynchronization signal sent by the base station of the target store, the synchronization base station to the base station of the target store, receive the binding data delivered by the synchronization base station in the synchronous manner, and determine the receiving state of the ESL as the synchronous receiving state; and
      bind the commodity after receiving the binding data.

To sum up, the method, apparatus and system according to the embodiments of the present disclosure achieve the following advantageous effects:
After synchronizing with a base station of a store, the ESL can determine whether there is an adjacent store according to the synchronization signal. If an adjacent store exists, the ESL can change the synchronization base station via an asynchronization signal. In the synchronous-asynchronous receiving state, the ESL can directly receive the synchronization signal and the binding data sent by the synchronization base station when synchronized with the target store. When synchronized with an adjacent store, the ESL can change the synchronization base station to the base station of the target store before receiving the binding data, and then changes to the synchronous receiving state in which only the synchronization signal sent by the synchronization base station is received. In this way, it is unnecessary for users to create and maintain user-level whitelists, and the ESL management system can automatically manage the store affiliation of the electronic shelf label, thus achieving fast initial binding of the ESL and avoiding erroneous operations on the ESL affiliated with the adjacent store.

The embodiments of the present disclosure further provide a computer device. FIG. 7 illustrates a schematic diagram of a computer device according to an embodiment of the present disclosure. The computer device 700 includes a memory 710, a processor 720, and a computer program 730 stored in the memory 710 and executable in the processor 720, and when executing the computer program 730, the processor 720 implements the aforementioned store affiliation management method for the ESL.

The embodiments of the present disclosure further provide a computer-readable storage medium, and the computer-readable storage medium stores a computer program which, when executed by a processor, implements the aforementioned store affiliation management method for the ESL.

The embodiments of the present disclosure further provide a computer program product, and the computer program product includes a computer program which, when executed by a processor, implements the aforementioned store affiliation management method for the ESL.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, device (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The specific embodiments make further detailed explanations to the objectives, technical solutions and advantageous effects of the present disclosure. It should be understood that those described above are only specific embodiments of the present disclosure and are not intended to limit the protection scope of the present disclosure. Any modification, equivalent substitution or improvement made within the spirit and principle of the present disclosure should fall within the protection scope of the present disclosure.

## Claims

1. A store affiliation management method for an electronic shelf label (ESL), wherein the method is applied to an ESL management system and comprises:
determining, when a commodity binding operation for an ESL needs to be initiated for a target store, a synchronization store of the ESL; wherein after determining a synchronization base station, the ESL determines a receiving state thereof according to a synchronization signal broadcast by the synchronization base station, and the receiving state comprises a synchronous receiving state and a synchronous-asynchronous receiving state, wherein the synchronization base station is a base station to which the ESL synchronizes, and a store corresponding to the synchronization base station is the synchronization store;
delivering, if the synchronization store of the ESL is the target store, binding data to the ESL in a synchronous manner, wherein the ESL binds a commodity according to the binding data; and
sending, if the synchronization store of the ESL is not the target store, an asynchronization signal to the ESL to notify the ESL to change the synchronization base station to the base station of the target store, and then delivering the binding data to the ESL in the synchronous manner; wherein the ESL, in the synchronous receiving state, only receives a signal sent by the synchronization base station, and in, the synchronous-asynchronous receiving state, receives both the signal sent by the synchronization base station and an asynchronization signal sent by a base station other than the synchronization base station.

2. The method according to claim 1, further comprising:
controlling the base station of each store to scan the synchronization signal from the base station of an adjacent store; and
setting, if the base station of the store detects the synchronization signal from the base station of the adjacent store, an indicator of whether an adjacent store identifier exists in the synchronization signal broadcast by the base station of the store to exist;
wherein after receiving the synchronization signal broadcast by the synchronization base station, the ESL determines the receiving state thereof according to the indicator of whether an adjacent store identifier exists in the synchronization signal.

3. The method according to claim 1, wherein the delivering the binding data to the ESL in the synchronous manner comprises:
sending the binding data to the ESL via the synchronization base station, so that the ESL binds the commodity according to the binding data.

4. The method according to claim 1, wherein the sending the asynchronization signal to the ESL to notify the ESL to change the synchronization base station to the base station of the target store, and then delivering the binding data to the ESL in the synchronous manner comprises:
notifying the base station of the target store to send the asynchronization signal to the ESL, wherein the asynchronization signal comprises a unique code of the target store, and the ESL changes the synchronization base station to the base station of the target store according to the received asynchronization signal, receives the binding data delivered by the synchronization base station in the synchronous manner, completes registration and networking, and determines the receiving state of the ESL as the synchronous receiving state.

5. The method according to claim 1, further comprising:
creating a unique code for each store, configuring the unique code to the base station of the corresponding store, and configuring the unique code to a handheld device of the corresponding store when the handheld device logs in; wherein after receiving a binding relationship between the commodity and the ESL as well as the unique code of the store sent by a user via the handheld device, the ESL determines whether the synchronization store is the target store according to the unique code; if so, the ESL reports the binding relationship to the synchronization base station; and if not, the ESL actively synchronizes with the base station of the target store and then reports the binding relationship to the synchronization base station;
retrieving, after receiving the binding relationship between the commodity and the ESL sent by the ESL, the binding data corresponding to the commodity in the binding relationship; and
delivering the binding data to the ESL via the synchronization base station.

6. A store affiliation management method for an electronic shelf label (ESL), wherein the method is applied to the ESL and comprises:
synchronizing with a base station of a store, determining the base station as a synchronization base station, and determining the store corresponding to the synchronization base station as a synchronization store;
receiving a synchronization signal broadcast by the synchronization base station;
determining, if an indicator of whether an adjacent store identifier exists in the synchronization signal indicates existence and no commodity is bound to the ESL, a receiving state of the ESL as a synchronous-asynchronous receiving state; changing, after receiving an asynchronization signal sent by the base station of a target store, the synchronization base station to the base station of the target store, receiving binding data delivered by the synchronization base station in a synchronous manner, and determining the receiving state of the ESL as a synchronous receiving state; receiving, after receiving the synchronization signal sent by the synchronization base station of the target store, the binding data delivered by the synchronization base station in the synchronous manner, and determining the receiving state of the ESL as the synchronous receiving state; wherein the ESL, in the synchronous-asynchronous receiving state, can receive both a signal sent by the synchronization base station and an asynchronization signal sent by a base station other than the synchronization base station;
determining, if the indicator of whether the adjacent store identifier exists in the synchronization signal indicates non-existence, the receiving state of the ESL as the synchronous receiving state, and receiving binding data delivered by an electronic information management system in the synchronous manner under the synchronous receiving state; wherein the ESL, in the synchronous receiving state, only receives the signal sent by the synchronization base station; and
binding the commodity after receiving the binding data.

7. The method according to claim 6, wherein the synchronizing with the base station of the store comprises:
periodically sending heartbeat data, wherein after being received by at least one base station of the store, the heartbeat data is reported to an ESL management system which sends a synchronization instruction to the ESL via the base station; and
selecting, upon first receiving the synchronization instruction sent by the base station of the store, an optimal base station in the store for synchronization and completing registration and networking according to the synchronization instruction.

8. The method according to claim 7, wherein after the synchronizing with the base station of the store, the method further comprises:
sending a registration and networking message to the ESL management system, wherein the registration and networking message comprises a unique code of the synchronization store and a synchronization identifier;
or sending heartbeat data to the ESL management system via the base station, wherein the heartbeat data comprises the unique code of the synchronization store and the synchronization identifier.

9. The method according to claim 6, further comprising:
periodically sending, after a synchronization state changes to an out-of-sync state, heartbeat data comprising an out-of-sync identifier; wherein at least one base station sends the heartbeat data comprising the out-of-sync identifier to an ESL management system, and the ESL management system sends a synchronization instruction comprising a unique code of the target store to the ESL in the out-of-sync state via the base station;
selecting, upon receiving the synchronization instruction, an optimal base station in the target store for synchronization according to the unique code of the target store in the synchronization instruction, so as to obtain a current synchronization base station;
determining whether the current synchronization base station is the synchronization base station prior to the out-of-sync state;
skipping, if so, registration and networking, and reporting the synchronization state of the ESL to the ESL management system; and
performing, if not, registration and networking for the current synchronization base station, and sending a registration and networking message to the ESL management system.

10. The method according to claim 6, further comprising:
actively sending, after the synchronization state changes to the out-of-sync state, a synchronization request to a plurality of base stations; wherein at least one base station sends a synchronization instruction comprising a unique code of the target store to the ESL in the out-of-sync state;
selecting, upon receiving the synchronization instruction, an optimal base station in the target store for synchronization according to the unique code of the target store in the synchronization instruction to obtain a current synchronization base station;
determining whether the current synchronization base station is the synchronization base station prior to the out-of-sync state;
skipping, if so, registration and networking, and reporting the synchronization state of the ESL to an ESL management system; and
performing, if not, registration and networking for the current synchronization base station, and sending a registration and networking message to the ESL management system.

11. The method according to claim 6, further comprising:
obtaining, after synchronizing with the base station of the store, a unique code of the store;
receiving a binding relationship between the commodity and the ESL as well as the unique code of the store sent by a user via a handheld device, and verifying whether the received unique code of the store is identical to a unique code of the synchronization store;
communicating, if so, with an ESL management system in the synchronous manner to perform commodity binding; and
actively sending, if not, a synchronization request and synchronizing with the base station corresponding to the received unique code of the store, then communicating with an ESL management system in the synchronous manner to perform commodity binding.

12. The method according to claim 11, wherein the communicating with the ESL management system in the synchronous manner to perform commodity binding comprises:
sending the binding relationship to the ESL management system via the synchronization base station, so that the ESL management system retrieves the binding data corresponding to the commodity in the received binding relationship and delivers the binding data to the ESL via the synchronization base station; and
performing commodity binding according to the binding data.

13. The method according to claim 11, wherein the actively sending the synchronization request and synchronizing with the base station corresponding to the received unique code of the store comprises:
determining, after receiving a synchronization instruction sent by the base station of the store, whether a unique code of the base station is identical to the received unique code of the store;
reporting, if so, the binding relationship via the base station corresponding to the synchronization instruction to complete binding, registration and networking; and
continuing, if not, to wait for synchronization instructions from the base stations of other stores until the received unique code of the base station sending the synchronization instruction is identical to the received unique code of the store.

14. A store affiliation management apparatus for an electronic shelf label (ESL), wherein the apparatus is applied to an ESL management system and comprises:
a synchronization store determination module configured to determine, when a commodity binding operation for an ESL needs to be initiated for a target store, a synchronization store of the ESL; wherein after determining a synchronization base station, the ESL determines a receiving state thereof according to a synchronization signal broadcast by the synchronization base station, and the receiving state includes a synchronous receiving state and a synchronous-asynchronous receiving state, wherein the synchronization base station is a base station to which the ESL synchronizes, and a store corresponding to the synchronization base station is the synchronization store;
a synchronous mode binding module configured to deliver, when the synchronization store of the ESL is the target store, binding data to the ESL in a synchronous manner, wherein the ESL binds a commodity according to the binding data; and
an asynchronous binding module configured to send, if the synchronization store of the ESL is not the target store, an asynchronization signal to the ESL to notify the ESL to change the synchronization base station to the base station of the target store, and then deliver the binding data to the ESL in the synchronous manner; wherein the ESL, in the synchronous receiving state, only receives a signal sent by the synchronization base station, and, in the synchronous-asynchronous receiving state, receives both the signal sent by the synchronization base station and an asynchronization signal sent by a base station other than the synchronization base station.

15. A store affiliation management apparatus for an electronic shelf label (ESL), wherein the apparatus is applied to an ESL and comprises:
a synchronization module configured to synchronize with a base station of a store, determine the base station as a synchronization base station, and determine the store corresponding to the synchronization base station as a synchronization store;
a synchronization signal receiving module configured to receive a synchronization signal broadcast by the synchronization base station;
a receiving state determination module configured to determine, if an indicator of whether an adjacent store identifier exists in the synchronization signal indicates existence and no commodity is bound to the ESL, a receiving state of the ESL as a synchronous-asynchronous receiving state; change, after receiving an asynchronization signal sent by the base station of a target store, the synchronization base station to the base station of the target store, receive binding data delivered by the synchronization base station in a synchronous manner, and determine the receiving state of the ESL as a synchronous receiving state; receive, after receiving the synchronization signal sent by the synchronization base station of the target store, the binding data delivered by the synchronization base station in the synchronous manner, and determine the receiving state of the ESL as the synchronous receiving state; wherein the ESL, in the synchronous-asynchronous receiving state, can receive both a signal sent by the synchronization base station and an asynchronization signal sent by a base station other than the synchronization base station; determine, if the indicator of whether the adjacent store identifier exists in the synchronization signal indicates non-existence, the receiving state of the ESL as the synchronous receiving state, and receive binding data delivered by an electronic information management system in the synchronous manner under the synchronous receiving state; wherein the ESL, in the synchronous receiving state, only receives the signal sent by the synchronization base station; and
a binding module configured to bind the commodity after receiving the binding data.

16. A store affiliation management system for an electronic shelf label (ESL), wherein the store affiliation management system comprises an ESL management system and an ESL, wherein
the ESL is configured to:
synchronize with a base station of a store, determine the base station as a synchronization base station, and determine the store corresponding to the synchronization base station as a synchronization store;
receive a synchronization signal broadcast by the synchronization base station; and
determine, if an indicator of whether an adjacent store identifier exists in the synchronization signal indicates existence and no commodity is bound to the ESL, a receiving state of the ESL as a synchronous-asynchronous receiving state, otherwise, determine the receiving state of the ESL as a synchronous receiving state; wherein the ESL, in the synchronous receiving state, only receives a signal sent by the synchronization base station, and, in the synchronous-asynchronous receiving state, receives both the signal sent by the synchronization base station and an asynchronization signal sent by a base station other than the synchronization base station;
the ESL management system is configured to:
determine, when a commodity binding operation for the ESL needs to be initiated for a target store, a synchronization store of the ESL; if the synchronization store of the ESL is the target store, deliver binding data to the ESL in a synchronous manner; and
send, if the synchronization store of the ESL is not the target store, an asynchronization signal to the ESL to notify the ESL to change the synchronization base station to the base station of the target store, and then deliver the binding data to the ESL in the synchronous mode; wherein
the ESL is further configured to:
change, after receiving the asynchronization signal sent by the base station of the target store, the synchronization base station to the base station of the target store, receive the binding data delivered by the synchronization base station in the synchronous manner, and determine the receiving state of the ESL as the synchronous receiving state; and
bind the commodity after receiving the binding data.

17. A computer device, comprising a memory, a processor, and a computer program stored in the memory and executable in the processor, wherein when executing the computer program, the processor implements the method according to any one of claims 1 to 13.

18. A computer-readable storage medium, wherein the computer-readable storage medium stores a computer program which, when executed by a processor, implements the method according to any one of claims 1 to 13.

19. A computer program product, wherein the computer program product comprises a computer program which, when executed by a processor, implements the method according to any one of claims 1 to 13.
